# EUROPEAN PATENT SPECIFICATION

(11) **EP 3 330 332 B1**
(45) Date of publication and mention of the grant of the patent: **14.09.2022**
(21) Application number: 16822363.4
(22) Date of filing: 29.04.2016
(51) Int. Cl.: C09D 175/04, C09D 161/28, C09D 7/65, B05D 5/00, B05D 1/18, C09D 5/00, C09D 7/63, C08K 5/54, C08L 101/14, C08K 5/5435

(54) **BINDER COMPOSITION, SLURRY COMPOSITION, AND METHOD FOR COATING SURFACE OF METAL WITH SUPERABSORBENT POLYMER**
BINDEMITTELZUSAMMENSETZUNG, SCHLAMMZUSAMMENSETZUNG UND VERFAHREN ZUR BESCHICHTUNG EINER OBERFLÄCHE AUS METALL MIT SUPERABSORBIERENDEM POLYMER
COMPOSITION DE LIANT, COMPOSITION DE TYPE SUSPENSION ÉPAISSE, ET PROCÉDÉ DE REVÊTEMENT D'UNE SURFACE MÉTALLIQUE AVEC UN POLYMÈRE SUPERABSORBANT

(30) Priority: 28.07.2015 KR 20150106849
(43) Date of publication of application: 06.06.2018
(73) Proprietor: LG Chem, Ltd., Seoul 07336 (KR)
(72) Inventor: PARK, Bo-Hee, Daejeon 34122 (KR); KIM, Young Sam, Daejeon 34122 (KR); JANG, Min-Seok, Daejeon 34122 (KR)
(74) Representative: Goddar, Heinz J.
(86) International application number: PCT/KR2016/004547
(87) International publication number: WO 2017/018640

(56) References cited:
- EP-A2- 1 112 780
- WO-A1-00/29486
- KR-B1- 100 740 810
- KR-B1- 101 250 884
- KR-B1- 101 458 830
- US-A1- 2003 232 920
- US-A1- 2003 232 920
- US-A1- 2006 115 611
- US-A1- 2010 062 200

## Description

### Technical Field

This application claims the benefit of Korean Patent Application No. KR 10-2015-0106849, filed July 28, 2015.

The present invention relates to a slurry composition and a method of coating the surface of a metal with a superabsorbent polymer and, more particularly, to a slurry composition comprising superabsorbent polymer particles and a binder composition, and a method of coating the surface of a metal with a superabsorbent polymer using the slurry composition.

### Background Art

Superabsorbent polymers (SAPs) are synthetic polymer materials that are able to absorb about 500 to 1000 times their own weight in moisture. Such superabsorbent polymers, having the ability to store water in powder form, have been widely applied to hygiene products, such as disposable baby and adult diapers and the like, and to a variety of fields, including bio and agricultural applications, electrical insulation applications, etc.

Such a superabsorbent polymer is composed of a crosslinked polymer having a hydrophilic functional group and is thus swollen in water but is not dissolved therein, and may absorb moisture from the air. However, a currently useful superabsorbent polymer is provided in powder form and is insoluble and infusible, and thus, limitations are imposed on additional processing, especially an additional process for coating the surface of a metal with a superabsorbent polymer. Also, conventional techniques are difficult to apply to various fields due to problems of detachment when the surface of a metal is coated with a superabsorbent polymer.

Therefore, in order to variously utilize a superabsorbent polymer for a heat exchanger such as an air conditioner, etc., it is essential to develop a technique for uniformly and stably coating the surface of a metal with a superabsorbent polymer.

### Disclosure

### Technical Problem

Accordingly, an object of the present invention is to provide a binder composition, which enables a superabsorbent polymer to be stably applied on the surface of a metal and may realize stable coating so as to prevent detachment even after a plurality of humidification-drying cycles; a slurry composition, including the binder composition and superabsorbent polymer particles; and a method of coating the surface of a metal with a superabsorbent polymer using the slurry composition.

### Technical Solution

In order to accomplish the above object, the present invention provides a binder composition, comprising: a urethane-based organic binder, a melamine-based organic binder, a silane coupling agent, and a solvent.

In addition, the present invention provides a slurry composition, comprising: the above binder composition and superabsorbent polymer particles.

In addition, the present invention provides a method of coating the surface of a metal with a superabsorbent polymer, comprising: (a) adding superabsorbent polymer particles to the above binder composition, to prepare a slurry composition, and (b) coating a metal substrate with the slurry composition.

### Advantageous Effects

According to the present invention, even when superabsorbent polymer particles are contained in a large amount in a slurry composition, the composition can be maintained at a low viscosity, thus enabling uniform coating of the metal surface with a superabsorbent polymer. Even when a plurality of humidification-drying cycles is performed in the coating process, detachment does not occur, and thus, the superabsorbent polymer can be applied to a variety of fields.

### Best Mode

The present invention addresses a slurry composition, and a coating method, suitable for coating the surface of a metal with a superabsorbent polymer. Hereinafter, a detailed description will be given of the present invention.

The binder composition includes a urethane-based organic binder, a melamine-based organic binder, a silane coupling agent, and a solvent.

An example of the urethane-based organic binder includes a polyurethane resin polymer, which is typically a resin polymer having a urethane bond resulting from coupling an alcohol group with an isocyanic acid (NH=C=O) group, and in which any resin polymer may be used without particular limitation so long as it has a urethane bond. The amount of the urethane-based organic binder is 5 to 20 wt%, and preferably 5 to 10 wt%, based on the total weight of the binder composition.

An example of the melamine-based organic binder includes a melamine-formaldehyde resin polymer, which refers to a thermosetting resin polymer resulting from reacting melamine with formaldehyde, and in which any thermosetting resin polymer may be used without particular limitation so long as it is prepared as above. The amount of the melamine-based organic binder is 5 to 10 wt%, based on the total weight of the binder composition.

The silane coupling agent is used to increase dispersibility in the binder composition and bondability of the polymers to thus enhance strength, and at least one selected from among typical silane coupling agents such as ethoxysilane, trimethoxysilane and glycidoxypropyl trimethoxysilane may be used without particular limitation. The amount of the silane coupling agent is 10 to 30 wt%, and preferably 10 to 20 wt%, based on the total weight of the binder composition.

Also, the solvent may include, but is not limited to, at least one selected from among typical organic solvents, such as ethyl alcohol, isopropyl alcohol, 1-methyl-2-pyrrolidinone, chloroform, dichloromethane, ethyl acetate, hexane, diethylether, benzene, and water. The amount of the solvent corresponds to the remainder of the binder composition, other than the amounts of the urethane-based organic binder, the melamine-based organic binder and the silane coupling agent, and is preferably 40 to 80 wt%.

As necessary, the binder composition may further include at least one of an emulsifying agent and a drying agent, and the emulsifying agent may be exemplified by polyoxyalkylene or the like, and the drying agent may include, for example, lithium chloride.

As for the slurry composition according to the present invention, the slurry composition is a suspension in slurry form in which superabsorbent polymer (powder) particles are contained (suspended) in the liquid binder composition, and the use thereof preferably includes, but is not limited to, coating of metal surfaces. As mentioned above, when the superabsorbent polymer particles, which are in a powder phase, are applied on the surface of a metal in a conventional manner, they may be detached (stripped). However, according to the present invention, since the composition including the superabsorbent polymer particles in slurry form is used, even when the surface of the metal coated therewith is subjected to a plurality of humidification-drying cycles, no detachment occurs.

A superabsorbent polymer is a synthetic polymer material in powder form that is able to absorb a maximum of about 1000 times its own weight in moisture, and is composed of a crosslinked polymer having a hydrophilic functional group and is thus swollen in water but is not dissolved therein, and may absorb moisture from air. Such a superabsorbent polymer may be prepared by, for example, polymerizing a monomer composition comprising a water-soluble ethylenic unsaturated monomer and a polymerization initiator to give a hydrogel polymer, which is then dried, ground and surface crosslinked, and, as necessary to impart additional functions, an additive such as porous superhydrophobic microparticles and the like may be supplied (Korean Patent Application No. 10-2013-0149440 (Method of preparing superabsorbent polymer) by the present applicant).

The superabsorbent polymer particles are contained in an amount of 60 wt% or less, and preferably 40 wt% or less, based on the total weight of the slurry composition, and the low viscosity of the slurry composition may be maintained even when the amount of the particles is a maximum of 60 wt%, thus enabling uniform coating. Furthermore, the slurry composition according to the present invention may be uniformly maintained at low viscosity, regardless of the size of the superabsorbent polymer particles. Hence, the size of the superabsorbent polymer particles is not limited.

According to the present invention, the method of coating a metal substrate (or the surface of a metal) with a superabsorbent polymer includes: a) adding superabsorbent polymer particles to the binder composition of the invention, to prepare a slurry composition, and b) coating a metal substrate with the slurry composition. In the method of coating the metal substrate (or the surface of a metal) with the superabsorbent polymer, the amount and size of the superabsorbent polymer particles are the same as in the description of the slurry composition including the binder composition and the superabsorbent polymer particles.

The coating process is preferably performed using a dip coating process, but is not limited so long as the same effect may be achieved thereby. The coating is preferably conducted for 10 sec to 1 min, but the present invention is not limited thereto.

### Mode for Invention

A better understanding of the present invention may be obtained via the following examples, which are set forth to illustrate, but are not to be construed as limiting the scope of the present invention. The scope of the present invention is given by the claims, and also contains all modifications within the meaning and range equivalent to the claims.

### Examples

### Preparation Example 1: Preparation of binder composition

5 g of ethyl alcohol, 5 g of ethyl silicate, 40 g of isopropyl alcohol, 5 g of trimethoxysilane, 10 g of glycidoxypropyl trimethoxysilane, 10 g of melamine-formaldehyde resin, 2.2 g of polyoxyalkylene, 0.3 g of lithium chloride, 0.5 g of water, 12 g of 1-methyl-2-pyrrolidone, and 10 g of polyurethane were mixed, thus preparing a binder composition.

### Preparation Example 2: Preparation of superabsorbent polymer

A superabsorbent polymer having a particle size of 50 to 100 µm was prepared.

### Preparation Example 3: Preparation of superabsorbent polymer

A superabsorbent polymer having a particle size of less than 50 µm was prepared.

### Example 1: Coating of aluminum substrate

(1) Preparation of slurry composition
   The binder composition of Preparation Example 1 was added with the superabsorbent polymer having a particle size of 50 to 100 µm of Preparation Example 2, thus preparing a slurry composition. As such, the amount of the superabsorbent polymer that was added was 10 wt% based on the total weight of the slurry composition.
(2) Coating of aluminum substrate
   An aluminum substrate was dip coated for 30 sec with the slurry composition prepared in (1) above and was then dried in an oven at 100°C for 1 hr, thus coating the aluminum substrate with the superabsorbent polymer.

### Example 2: Coating of aluminum substrate

An aluminum substrate was coated with a superabsorbent polymer in the same manner as in Example 1, with the exception that the slurry composition was prepared by adding the binder composition of Preparation Example 1 with the superabsorbent polymer in an amount of 20 wt% based on the total weight of the slurry composition.

### Example 3: Coating of aluminum substrate

An aluminum substrate was coated with a superabsorbent polymer in the same manner as in Example 1, with the exception that the slurry composition was prepared by adding the binder composition of Preparation Example 1 with the superabsorbent polymer in an amount of 30 wt% based on the total weight of the slurry composition.

### Example 4: Coating of aluminum substrate

An aluminum substrate was coated with a superabsorbent polymer in the same manner as in Example 1, with the exception that the slurry composition was prepared by adding the binder composition of Preparation Example 1 with the superabsorbent polymer in an amount of 40 wt% based on the total weight of the slurry composition.

### Example 5: Coating of aluminum substrate

(1) Preparation of slurry composition
   The binder composition of Preparation Example 1 was added with the superabsorbent polymer having a particle size of less than 50 µm of Preparation Example 3, thus preparing a slurry composition. As such, the amount of the superabsorbent polymer that was added was 10 wt% based on the total weight of the slurry composition.
(2) Coating of aluminum substrate
   An aluminum substrate was dip coated for 30 sec with the slurry composition prepared in (1) above and was then dried in an oven at 100°C for 1 hr, thus coating the aluminum substrate with the superabsorbent polymer.

### Example 6: Coating of aluminum substrate

An aluminum substrate was coated with a superabsorbent polymer in the same manner as in Example 5, with the exception that the slurry composition was prepared by adding the binder composition of Preparation Example 1 with the superabsorbent polymer in an amount of 20 wt% based on the total weight of the slurry composition.

### Example 7: Coating of aluminum substrate

An aluminum substrate was coated with a superabsorbent polymer in the same manner as in Example 5, with the exception that the slurry composition was prepared by adding the binder composition of Preparation Example 1 with the superabsorbent polymer in an amount of 30 wt% based on the total weight of the slurry composition.

### Example 8: Coating of aluminum substrate

An aluminum substrate was coated with a superabsorbent polymer in the same manner as in Example 5, with the exception that the slurry composition was prepared by adding the binder composition of Preparation Example 1 with the superabsorbent polymer in an amount of 40 wt% based on the total weight of the slurry composition.

### Comparative Example 1: Non-coated aluminum substrate

An aluminum substrate, which was not coated with any composition, was prepared.

### Test Examples

### Test Example 1: Evaluation of state of coated substrate

The state of the coated aluminum substrate of each of Examples 1 to 8 was observed with the naked eye using an optical microscope (OM, digital camera: OMOS 3M). The results are shown in Table 1 below. In Table 1, O designates a uniform state, Δ designates the state in which agglomeration or cracking was present but had no effect on the coating, and X designates the state in which non-coating or stripping occurred.

**[Table 1]**

| | Test Example 1 (State of coated substrate) |
|---|---|
| Example 1 | O |
| Example 2 | O |
| Example 3 | O |
| Example 4 | O |
| Example 5 | O |
| Example 6 | O |
| Example 7 | O |
| Example 8 | O |
| C. Example 1 | - |

### Test Example 2: Humidification performance of coated substrate

The coated aluminum substrates of Examples 1 to 8 and the non-coated aluminum substrate of Comparative Example 1 were allowed to stand in a temperature-and-humidity-controlled oven at a temperature of 32°C and a humidity of 90% for 1 hr, after which changes in the weight thereof were measured and represented by the percentage values. The results are shown in Table 2 below.

### Test Example 3: Dehumidification performance of coated substrate

The coated aluminum substrates of Examples 1 to 8 and the non-coated aluminum substrate of Comparative Example 1 were allowed to stand in a convection oven at a temperature of 100°C for 1 hr, after which changes in the weight thereof were measured and represented by the percentage values. The results are shown in Table 2 below.

**[Table 2]**

| | Test Example 2 (Weight change (%) of substrate in test for humidification performance) | Test Example 3 (Weight change (%) of substrate in test for dehumidification performance) |
|---|---|---|
| Ex.1 | 4.6 | -4.0 |
| Ex.2 | 8.1 | -2.9 |
| Ex.3 | 14.8 | -2.9 |
| Ex.4 | 24.5 | -2.3 |
| Ex.5 | 1.5 | -4.0 |
| Ex.6 | 11.3 | -3.0 |
| Ex.7 | 15.2 | -5.7 |
| Ex.8 | 17.5 | -3.5 |
| C.Ex.1 | 3.9 | 0.8 |

### Test Example 4: Stability of substrate

The tests for humidification performance/dehumidification performance of Test Examples 2 and 3 were repeated for 3 cycles, after which the stability of the coated aluminum substrates (Examples 1 to 8) was observed with the naked eye using an optical microscope (OM, digital camera: OMOS 3M), and the state of each substrate after the tests for humidification performance/dehumidification performance was compared and quantified (0: stripped, 5: slightly stripped and cracked, 10: the same state before humidification/dehumidification). The results are shown in Table 3 below.

**[Table 3]**

| | Test Example 4 (State of substrate after tests for humidification performance/dehumidification performance) |
|---|---|
| Ex.1 | 10 |
| Ex.2 | 10 |
| Ex.3 | 10 |
| Ex.4 | 9 |
| Ex.5 | 10 |
| Ex.6 | 10 |
| Ex.7 | 9 |
| Ex.8 | 7 |

As for Examples 1 to 4 (coating with the slurry composition including the superabsorbent polymer particles having a particle size of 50 to 100 µm), slight cracking occurred in Example 4 using the slurry composition containing 40 wt% of the superabsorbent polymer particles. As for Examples 5 to 8 using the superabsorbent polymer having a particle size of less than 50 µm, cracking, detachment and the like occurred in Examples 7 and 8, but not in Examples 5 and 6. However, such cracking or detachment did not deteriorate the stability of the substrate, and thus did not have any significant influence on the stability of the substrate.

Based on the results of Test Examples 1 to 4, the aluminum substrates coated with the compositions (Examples 1 to 8) manifested excellent stability, compared to the aluminum substrate not coated with the composition (Comparative Example 1). Also, even when the slurry composition of the invention contained a large amount of the superabsorbent polymer particles, the low viscosity thereof could be maintained, thus enabling the uniform and stable coating of the substrate.

## Claims

1. A slurry composition, comprising: a binder composition comprising a urethane based organic binder, a melamine based organic binder, a silane coupling agent, and a solvent; and superabsorbent polymer particles,
wherein the amount of melamine based organic binder is the range of 5-10 wt%, based on the total weight of the binder composition.

2. The slurry composition of claim 1, wherein the superabsorbent polymer particles are contained in an amount of 60 wt% or less based on a total weight of the slurry composition.

3. The slurry composition of claim 1, wherein the superabsorbent polymer particles are contained in an amount of 40 wt% or less based on a total weight of the slurry composition.

4. The slurry composition of claim 1, wherein the binder composition further comprises at least one of an emulsifying agent and a drying agent.

5. A method of coating a surface of a metal with a superabsorbent polymer, comprising:
(a) adding superabsorbent polymer particles to a binder composition comprising a urethane-based organic binder, a melamine-based organic binder, a silane coupling agent and a solvent to prepare a slurry composition; and
(b) coating a metal substrate with the slurry composition,
wherein the amount of melamine based organic binder is the range of 5-10 wt%, based on the total weight of the binder composition.

6. The method of claim 5, wherein the superabsorbent polymer particles are contained in an amount of 60 wt% or less based on a total weight of the slurry composition.

7. The method of claim 5, wherein the superabsorbent polymer particles are contained in an amount of 40 wt% or less based on a total weight of the slurry composition.

8. The method of claim 5, wherein the coating is performed using dip coating.

9. The method of claim 5, wherein the coating is performed for 10 sec to 1 min.

## Patentansprüche

1. Eine Aufschlämmungszusammensetzung, umfassend eine Bindemittelzusammensetzung, die ein organisches Bindemittel auf Basis von Urethan, ein organisches Bindemittel auf Basis von Melamin, ein Silankopplungsmittel und ein Lösungsmittel umfasst; und superabsorbierende Polymerpartikel, wobei die Menge an organischem Bindemittel auf Basis von Melamin im Bereich von 5-10 Gew.-% liegt, bezogen auf das Gesamtgewicht der Bindemittelzusammensetzung.

2. Die Aufschlämmungszusammensetzung nach Anspruch 1, bei der die superabsorbierenden Polymerpartikel in einer Menge von 60 Gew.-% oder weniger enthalten sind, bezogen auf ein Gesamtgewicht der Aufschlämmungszusammensetzung.

3. Die Aufschlämmungszusammensetzung nach Anspruch 1, bei der die superabsorbierenden Polymerpartikel in einer Menge von 40 Gew.-% oder weniger enthalten sind, bezogen auf ein Gesamtgewicht der Aufschlämmungszusammensetzung.

4. Die Aufschlämmungszusammensetzung nach Anspruch 1, bei der die Bindemittelzusammensetzung ferner mindestens eines von einem Emulgator und einem Trocknungsmittel umfasst.

5. Ein Verfahren zum Beschichten einer Oberfläche eines Metalls mit einem superabsorbierenden Polymer, umfassend:
(a) Hinzufügen von superabsorbierenden Polymerpartikeln zu einer Bindemittelzusammensetzung, die ein organisches Bindemittel auf Basis von Urethan, ein organisches Bindemittel auf Basis von Melamin, ein Silankopplungsmittel und ein Lösungsmittel umfasst, um eine Aufschlämmungszusammensetzung herzustellen; und
(b) Beschichten eines Metallsubstrats mit der Aufschlämmungszusammensetzung, wobei die Menge an organischem Bindemittel auf Basis von Melamin im Bereich von 5-10 Gew.-% liegt, bezogen auf das Gesamtgewicht der Bindemittelzusammensetzung.

6. Das Verfahren nach Anspruch 5, bei dem die superabsorbierenden Polymerpartikel in einer Menge von 60 Gew.-% oder weniger enthalten sind, bezogen auf ein Gesamtgewicht der Aufschlämmungszusammensetzung.

7. Das Verfahren nach Anspruch 5, bei dem die superabsorbierenden Polymerpartikel in einer Menge von 40 Gew.-% oder weniger enthalten sind, bezogen auf ein Gesamtgewicht der Aufschlämmungszusammensetzung.

8. Das Verfahren nach Anspruch 5, bei dem das Beschichten unter Verwendung von Tauchbeschichten durchgeführt wird.

9. Das Verfahren nach Anspruch 5, bei dem das Beschichten 10 s bis 1 min lang durchgeführt wird.

## Revendications

1. Composition en suspension épaisse, comprenant: une composition liante comprenant un liant organique à base d'uréthane, un liant organique à base de mélamine, un agent de couplage de type silane et un solvant ; et des particules polymères superabsorbantes,
où la quantité de liant organique à base de mélamine, rapportée au poids total de la composition liante, est dans la plage de 5-10 % en poids.

2. Composition en suspension épaisse de la revendication 1, où les particules polymères superabsorbantes sont contenues à une quantité, rapportée à un poids total de la composition en suspension épaisse, inférieure ou égale à 60 % en poids.

3. Composition en suspension épaisse de la revendication 1, où les particules polymères superabsorbantes sont contenues à une quantité, rapportée à un poids total de la composition en suspension épaisse, inférieure ou égale à 40 % en poids.

4. Composition en suspension épaisse de la revendication 1, où la composition liante comprend au moins un parmi un agent émulsionnant et un agent desséchant.

5. Procédé de revêtement d'une surface d'un métal avec un polymère superabsorbant, comprenant :
(a) l'addition de particules polymères superabsorbantes à une composition liante comprenant un liant organique à base d'uréthane, un liant organique à base de mélamine, un agent de couplage de type silane et un solvant pour préparer une composition en suspension épaisse ; et
(b) le revêtement d'un substrat métallique avec la composition en suspension épaisse,
où la quantité de liant organique à base de mélamine, rapportée au poids total de la composition liante, est dans la plage de 5-10 % en poids.

6. Procédé de la revendication 5, où les particules polymères superabsorbantes sont contenues à une quantité, rapportée à un poids total de la composition en suspension épaisse, inférieure ou égale à 60 % en poids.

7. Procédé de la revendication 5, où les particules polymères superabsorbantes sont contenues à une quantité, rapportée à un poids total de la composition en suspension épaisse, inférieure ou égale à 40 % en poids.

8. Procédé de la revendication 5, où le revêtement est effectué par revêtement au trempé.

9. Procédé de la revendication 5, où le revêtement est effectué pendant 10 s à 1 min.
